Europäisches Patentamt

European Patent Office

Office européen des brevets

(11) Publication number: **0 149 215**
**B1**

(12) **EUROPEAN PATENT SPECIFICATION**

(45) Date of publication of patent specification: **31.05.89**

(51) Int. Cl.⁴: **G 01 K 13/00,** G 01 K 7/20

(21) Application number: **84116101.1**

(22) Date of filing: **21.12.84**

(54) Electronic clinical thermometer.

(30) Priority: **21.12.83 JP 239800/83**
**28.12.83 JP 248984/83**

(43) Date of publication of application:
**24.07.85 Bulletin 85/30**

(45) Publication of the grant of the patent:
**31.05.89 Bulletin 89/22**

(84) Designated Contracting States:
**DE FR GB IT**

(56) References cited:
**EP-A-0 022 061**
**AU-B- 15 105**
**AU-B- 15 105**
**DE-A-2 848 112**
**US-A-4 206 649**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Iwama, Nobuyuki Toshiba-Hakuun-ryo**
**2-30-18, Tamagawa**
**Ota-ku Tokyo (JP)**
Inventor: **Kikuchi, Naoshi**
**1-8-6, Yatsu Narashino-shi**
**Chiba-ken (JP)**
Inventor: **Tanaka, Toshiro**
**4-3-16, Shimomaruko Ota-ku**
**Tokyo (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

**Description**

The present invention relates to an electronic clinical thermometer for detecting temperature by measuring the frequency corresponding to the temperature, comprising a thermometric oscillator for generating an oscillation frequency which varies with temperature, a thermometric counter for counting the oscillation frequency from said thermometric oscillator to convert the frequency to the temperature, a maximum value memory circuit for memorising the maximum value of the measured temperatures, a comparison circuit for comparing the value from said thermometric counter and the value in said maximum value memory circuit to detect and latch a new maximum value of the thermometric counter in the maximum value memory circuit when the value from the thermometric counter is larger than the value latched in said maximum value memory circuit, and display means for displaying the detected temperature value.

Such a thermometer is known from EP-A-0 022 061.

The known thermometer also includes a reference frequency source whose output is divided by a divider to time an internal oven which the output from the thermometric oscillator is to be counted. The thermometric oscillator is not however de-energised at the end of this interval. Therefore it continues to dissipate energy when its output is no longer required, unless the user decides to switch off the unit.

A prior art electronic clinical thermometer in general use is equipped with a sliding switch for controlling the turning on and off of the power source, and the power is shut off by operating the sliding switch after the detection of temperature. However, operating such a sliding switch is troublesome, and power is often wasted due to forgetting to turn off the power.

Moreover, a temperature sensitive resistor, is installed in the circuit of a thermometric oscillator whose oscillation frequency varies with temperature. The resistance of the resistor is small so that a large current flows through the resistor, consuming larger power. Accordingly, the wasted amount of power due to keeping the power in the on-state during the period for which no operation is needed, has been largely responsible for determining the life of the battery. Further, the electronic clinical thermometer in general use is mainly used under the emergency condition in which somebody in the family is having a fever. In that condition, there exists a possibility of finding it inoperative at such an emergency because of the dead battery due to forgetting to turn off the switch. Moreover, in the case of use in the hospital, if its power consumption is too large, there exists a large possibility of havig a dead battery due to high frequency of its use there.

DE-A-2848112 discloses an electronic medical thermometer employing an analogue sensing device and a digital-to-analogue converter driven by an oscillator for providing a digital output to a display. In order to limit the measuring interval, the digital-to-analogue converter is disabled after a predetermined time interval. However, no attempt is made to save energy, since the oscillator continues to function after the time interval unless the user switches off the power supply.

In order to avoid the dead battery situation due to power exhaustion, there has been proposed a thermometer in which a switching transistor for controlling the turning on and off of the power source is installed in the LSI for clinical thermometer, so arranged as to have the power source to be turned off automatically after elapse of a prescribed time (for example, the times for detecting and displaying the temperature) to eliminate the possibility of forgetting to turn off the switch.

However, the switching transistor for controlling the turning on and off of the power source is disadvantageous due to that it occupies a large area on the LSI chip, defeating the attempts to make the small-sized and low-priced LSI.

In addition, in the case where the time for reading out the temperature display is undertain, like in the hospital, the time interval between the taking of temperature in the room and the visit of the nurse for recording the measured temperature may be relatively large.

It is then difficult to shorten the time from turning the power source on to shutting the power source off automatically, because of the possibility of having the power source turned off before the temperature display is read out. Therefore, there exist many electronic clinical thermometers without the function of automatic shut off of the power source, and hence, the only method for reducing the power consumption is to turn off the power switch deliberately at an earlier time.

AU-B-15 105 discloses an electronic thermometer system having an automatic electronic switch for holding the system on for a limited time and then switching it off to conserve power.

Such a system cannot readily be adapted to function as a clinical thermometer since the temperature cannot be read after power is switched off. No suggestion is made of providing any form of maximum value circuit and indeed such a provision would have little purpose where the entire system is switched off to conserve power.

Summary of the Invention

An object of the present invention is to provide an electronic clinical thermometer which is capable of reducing the power consumption.

Another object of the present invention is to provide an electronic clinical thermometer which is capable of extending the life of the battery used.

Another object of the present invention is to provide an electronic clinical thermometer which is capable of displaying the body temperature over a long period while aiming at a lower consumption of the power.

According to the invention, the thermometer defined in the first paragraph of this specification is characterised by:

oscillation discontinuing means for discontinuing the oscillation of said thermometric oscillator after elapse of a predetermined time from a prescribed point in time, only when said comparison circuit has detected a maximum value, said oscillation discontinuing means comprising a reference oscillator for generating a reference clock signal, a clock counter for counting the oscillation frequency of said reference oscillator circuit and for producing a signal to cause the oscillation of said thermometric oscillator to discontinue after said predetermined time, and means for resetting the clock counter when said measuring means has detected a maximum value.

Brief Description of the Drawings

These and other objects, features and advantages of the present invention will be more apparent from the following description of a preferred embodiment taken in conjunction with the accompanying drawings in which:

Fig. 1 is a block diagram showing the circuit construction of an electronic clinical thermometer embodying the present invention;

Fig. 2 is a circuit diagram of the oscillation circuit shown in Fig. 1;

Fig. 3 is a flow chart illustrating the operation of the embodiment shown in Fig. 1;

Figs. 4a and 4b are time charts illustrating the operation of the oscillation circuit for measurement shown in Fig. 2; and

Fig. 5 is a block diagram for illustrating the circuit construction of another embodiment of the electronic clinical thermometer in accordance with the present invention.

Description of the Preferred Embodiments

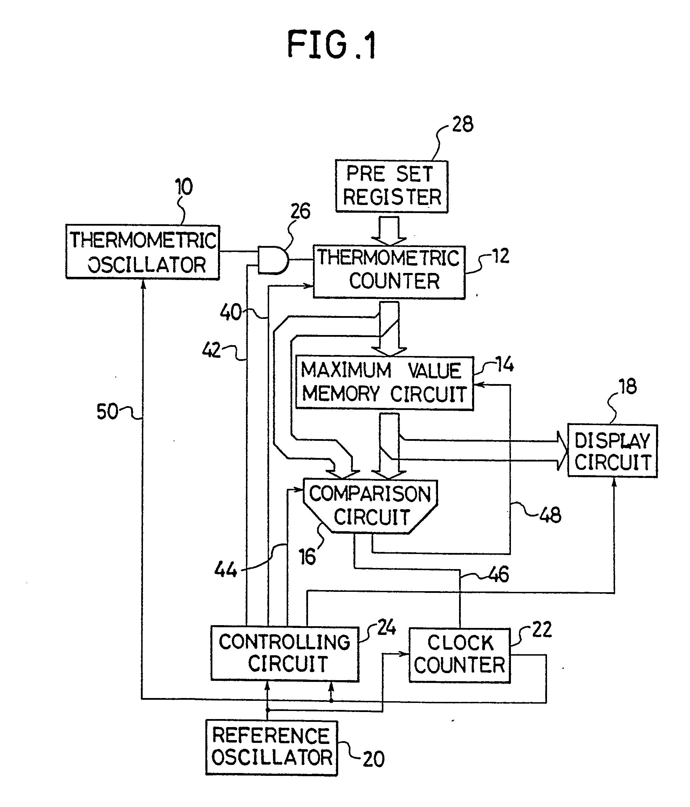

Referring to Fig. 1, there is shown the circuit construction of an electronic clinical thermometer embodying the present invention.

The electronic clinical thermometer in the above includes a thermometric oscillator 10 whose oscillation frequency varies in response to the temperature, a thermometric counter 12 for counting the oscillation frequency of the thermometric oscillator 10 and converting it to the temperature, a maximum value memory circuit 14 for memorizing the maximum temperature value, a comparison circuit 16 for comparing the value from the thermometric counter 12 and the value in the maximum value memory circuit 14 and when the value from the thermometric counter 12 is the larger, the value of the thermometric counter is latched to the maximum value memory circuit 14 as a new maximum value, a display circuit 18 for displaying the value of the maximum value memory circuit 14, and a reference oscillator 20 for outputting the reference clock. Furthermore, the thermometer includes a clock counter 22 for counting the oscillation frequency of the reference oscillator 20 and for outputting an overflow signal to cause to discontinue the oscillation of the thermometric oscillator 10 after a prescribed time, and a controlling circuit 24 for controlling the comparison circuit 16 to output a reset signal to the clock counter 22 in case the maximum value is not detected.

In addition, a gate 26 which is controlled by the controlling circuit 24 is arranged between the thermometric oscillator 10 and the thermometric counter 12, and a preset register 28 is connected to the thermometric counter 12.

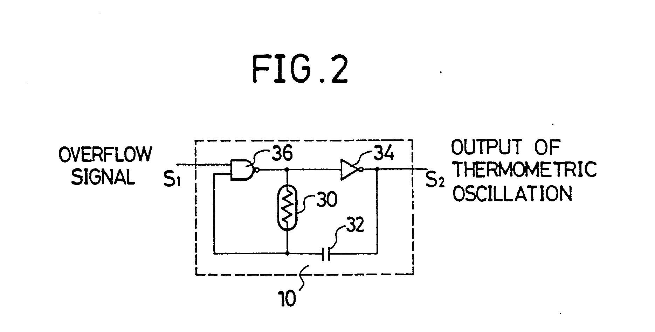

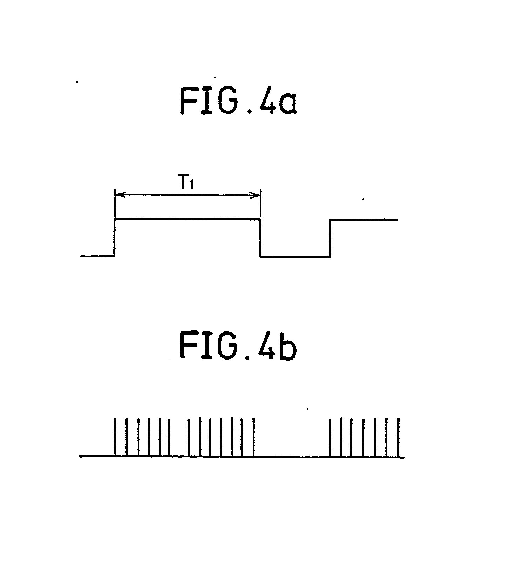

The thermometric oscillator 10 is constructed, as shown in Fig. 2, from a temperature sensitive resistor 30 comprising a linear thermistor whose resistance varies in proportion to the temperature, a capacitor 32, an inverter 34, and a NAND gate 36. When a signal from the clock counter 22 is inputted to the NAND gate 36 for a fixed time interval T1, as shown in Fig. 4a, the thermometric oscillator 10 begins to oscillate to produce an output pulse S2 at the leading edge of the measurement command pulse S1, as shown in Fig. 4b, and discontinues the oscillation of the output pulse S2 at the trailing edge of the measurement command pulse S1. Since the frequency of the output pulse S2 of the thermometric oscillator 10 is proportional to the temperature, calibration is made beforehand so as to accommodate the number of output pulses S2 corresponding to the temperature within the interval T1 of the measurement command pulse. By making arrangement in this way, it becomes possible to convert the count of the output pulses S2 to the temperature by the use of the thermometric counter 12.

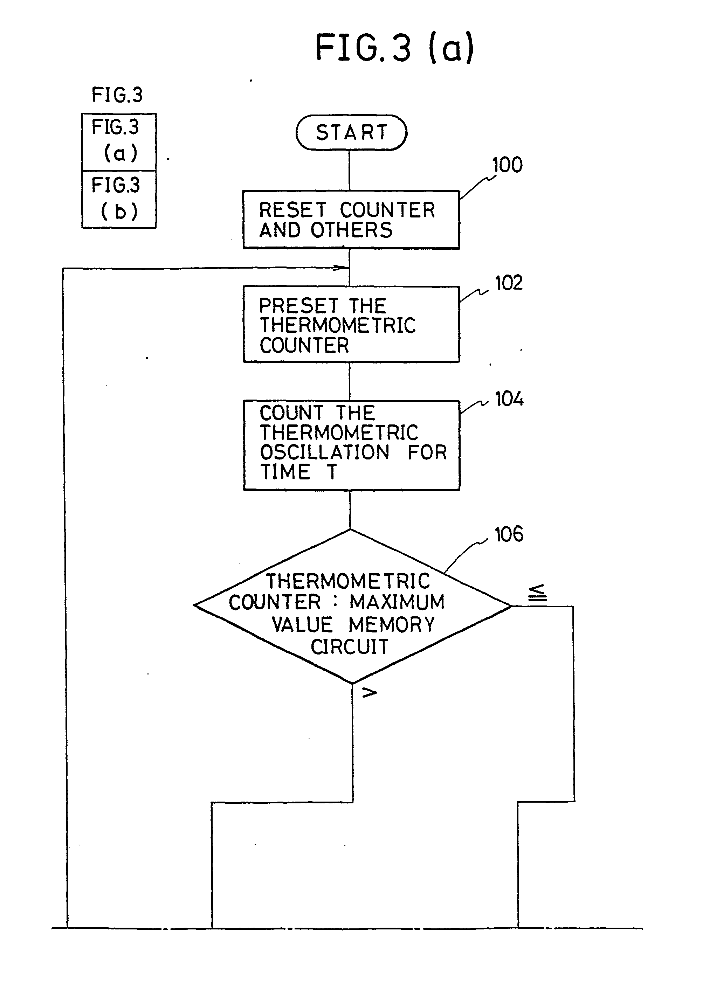

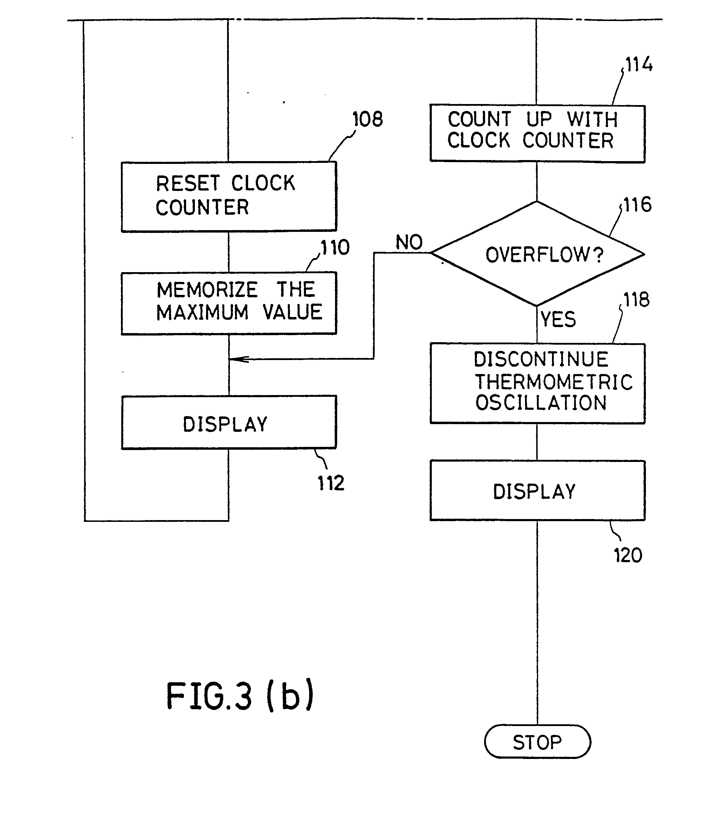

Next, referring to Fig. 3, the operation of the eletronic clinical thermometer shown in Fig. 1 will be discribed.

First, in step 100, the thermometric counter 12 and the clock counter 22 are reset by the controlling signal from the controlling circuit 24. Then, the thermometric counter 12 presets the initial value from the preset register 28, in accordance with the first controlling signal 40 from the controlling circuit 24 created by the output of the reference oscillator (step 102). Next, the gate 26 is opened by the second controlling signal 42 from the controlling circuit 24, to allow the thermometric counter 12 to count for a time t the oscillation frequency which is linear relative to the temperature from the thermometric oscillator 10 (step 104).

After the time t, the gate 26 is closed by the second controlling signal 42, the thermometric counter 12 discontinues counting of the oscillation frequency of the thermometric oscillator 10, and the comparison circuit 16 compares, by the third controlling signal 44 from the controlling circuit 24, the content of the thermometric counter 12 and the content of the maximum value memory circuit 14 (step 106). If the result of the comparison shows that the content of the thermometric counter 12 is larger than the content of the maximum value memory circuit 14, the comparison circuit 16 resets, by the reset signal 46, the clock counter 22 which has been counting the oscillation frequency of the reference oscillator 20 (step 108). With a latch signal 48, the comparison circuit 16 latches the content of the thermometric counter 12 to the maximum value memory circuit 14 as a new maximum value (step 110). Next, the display circuit 18 displays digitally the content of the maximum value memory circuit 14 as a temperature value (step 112). If, in step 106, the content of the thermometric counter 12 becomes smaller than the content of the maximum value memory circuit 14, the comparison circuit 16 create neither a latch signal 48 for latching the content of the thermometric counter 12 to the maximum value memory circuit 14 nor a reset signal 46 for resetting the clock counter 22. If such periods continue, the content of the clock counter 22 continues to be counted up without being reset (step 114). In step 116, when an overflow takes place after a prescribed time, oscillation of the thermometric oscillator 10 is discontinued by the overflow signal 50 from the time counter 22, interrupting the current flowing to the temperature sensitive resistor 30 (step 118). Thereafter, display alone will occur without having thermometric oscillation (step 120). In this stage, it is possible to reduce the power consumption of the electronic clinical thermometer as a whole since the thermometric oscillator 10 is not working and power is consumed for the operation of only the reference oscillator 20 and the display circuit 18. In step 116, if no overflow occurs after a prescribed time, it proceeds to step 112 to digitally display the maximum value, and returns from step 112 to step 102 to preset the thermometric counter 12.

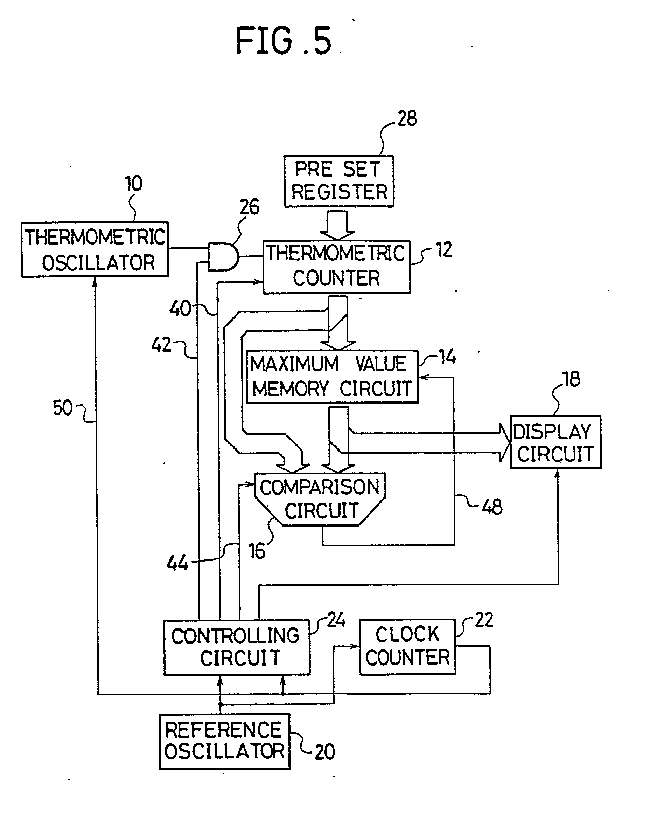

Next, referring to Fig. 5, description will be made of a second embodiment which accomplishes the discontinuation of the thermometric oscillation at a prescribed time after the turn-on of the power source.

In the second embodiment, identical symbols will be used to designate the identical parts as in the embodiment shown in Fig. 1, to omit the explanation. The second embodiment differs from the first embodiment, though basically the same, in that it is constructed to begin the counting of the oscillation frequency of the reference oscillator from the moment of turning the power source on, and to discontinue the operation of the thermometric oscillator 10 by causing an overflow without failure after prescribed time.

Therefore, by such a construction, it is possible to discontinue the oscillation of the thermometric oscillator 10 after elapse of a prescribed time corresponding to the time interval between the beginning of temperature detection and the reading-out of the temperature, achieving a reduction in the power consumption as in the first embodiment.

Although a thermometric oscillator circuit with thermistor was used in the foregoing embodiments, the present invention is not limited to the use of this circuit, and it may be replaced by any other oscillator circuit as long as the oscillation frequency varies with temperature and it permits the control of on and off of the oscillation. Furthermore, the clock generating circuit too need not be limited to the CR oscillator, and, like in the above, any other oscillator circuit with on-off control of oscillation may be utilized as may be found convenient.

Various modifications will become possible for those skilled in the art after receiving the teachings of the present disclosure without departing from the scope of the invention as claimed by the claims.

**Claims**

1. An electronic clinical thermometer for detecting temperature by measuring the frequency corresponding to the temperature, comprising a thermometric oscillator (10) for generating an oscillation frequency which varies with temperature, a thermometric counter (12) for counting the oscillation frequency from said thermometric oscillator to convert the frequency to the temperature, a maximum value memory circuit (14) for memorising the maximum value of the measured temperatures, a comparison circuit (16) for comparing the value from said thermometric counter and the value in said maximum value memory circuit to detect and latch a new maximum value of the thermometric counter in the maximum value memory circuit when the value from the thermometric counter is larger than the value latched in said maximum value memory circuit, and display means (18) for displaying the detected temperature value, characterised by:

oscillation discontinuing means (20, 22, 24) for discontinuing the oscillation of said thermometric oscillator (10) after elapse of a predetermined time from a prescribed point in time, only when said comparison circuit (16) has detected a maximum value, said oscillation discontinuing means comprising a reference oscillator (20) for generating a reference clock signal, a clock counter (22) for counting the oscillation frequency of said reference oscillator circuit and for producing a signal to cause the oscillation of said thermometric oscillator to discontinue after said predetermined time, and means (24) for resetting the clock counter (22) when said measuring means has detected a maximum value.

2. An electronic clinical thermometer as claimed in claim 1, characterised in that said point in time is the time at which said clock counter (22) is reset.

3. An electronic clinical thermometer as claimed in claims 1 or 2, characterised in that said point in time is the time at the beginning of temperature detection.

4. An electronic clinical thermometer as claimed in claim 3, characterised in that said oscillation discontinuing means (20, 22, 24) comprises a reference oscillator for generating the reference clocks, a clock counter for counting the oscillation frequency of said reference oscillator circuit to cause the oscillation of said thermometric oscillation means to discontinue after a predetermined time, and a means for resetting the clock counter, said clock counter resetting means (24) comprises a controlling circuit for controlling said comparison circuit to output a reset signal to said clock counter at the beginning of temperature detection.

## Patentansprüche

1. Elektronisches Medizinalthermometer zum Erfassen von Temperatur durch Messen der Frequenz entsprechend der Temperatur, mit einem thermometrischen Oszillator (10) zum Erzeugen einer mit Temperatur variierenden Schwingungsfrequenz, einem thermometrischen Zähler (12) zum Zählen der Schwingungsfrequenz von dem thermometrischen Oszillator, um die Frequenz in die Temperatur umzuwandeln, einer Höchstwertspeicherschaltung (14) zum Speichern des Höchstwertes der gemessenen Temperaturen, einer Vergleichsschaltung (16) zum Vergleichen des Wertes von dem thermometrischen Zähler mit dem Wert in der Höchstwertspeicherschaltung, um einen neuen Höchstwert des thermometrischen Zählers zu erfassen und denselben in der Höchstwertspeicherschaltung zu verriegeln, wenn der Wert von dem thermometrischen Zähler größer als der in der Höchstwertspeicherschaltung verriegelte Wert ist, und Anzeigemitteln (18) zum Anzeigen des erfaßten Temperaturwertes, gekennzeichnet durch Schwingungsunterbrechungsmittel (20, 22, 24) zum Unterbrechen der Schwingung des thermometrischen Oszillators (10) nach Ablauf einer vorbestimmten Zeit nach einem vorbestimmten Zeitpunkt, nur wenn die Vergleichsschaltung (16) einen Höchstwert erfaßt hat, wobei die Schwingungsunterbrechungsmittel einen Bezugsoszillator (20) zum Erzeugen eines Bezugstaktsignals, einen Taktzähler (22) zum Zählen der Schwingungsfrequenz der Bezugsoszillatorschaltung und zum Erzeugen eines Signals, um die Schwingung des thermometrischen Oszillators nach einer vorbestimmten Zeit zu unterbrechen, und Mittel (24) zum Zurückstellen des Taktzählers (22), wenn die Messungsmittel einen Höchstwert erfaßt haben, enthalten.

2. Elektronisches Medizinalthermometer nach Anspruch 1, dadurch gekennzeichnet, daß der Zeitpunkt gleich dem Zeitpunkt ist, an dem der Taktzähler (22) zurückgestellt ist.

3. Elektronisches Medizinalthermometer nach den Ansprüchen 1 oder 2, dadurch gekennzeichnet, daß der Zeitpunkt der Zeitpunkt am Anfang der Temperaturerfassung ist.

4. Elektronisches Medizinalthermometer nach Anspruch 3, dadurch gekennzeichnet, daß die Schwingungsunterbrechungsmittel (20, 22, 24) einen Bezugsoszillator zum Erzeugen der Bezugstakte, einen Taktzähler zum Zählen der Schwingungsfrequenz der Bezugsoszillatorschaltung, um die Unterbrechung der Schwingung der thermometrischen Schwingungsmittel nach einer vorbestimmten Zeit zu bewirken, und Mittel zum Zurückstellen des Taktzählers enthalten, und die Taktzählerzurückstellungsmittel (24) eine Steuerschaltung zum Steuern der Vergleichsschaltung enthalten, um ein Zurückstellungssignal an den Taktzähler am Anfang der Temperaturerfassung auszugeben.

## Revendications

1. Thermomètre médical électronique pour détecter une température en mesurant une fréquence correspondant à la température, comprenant un oscillateur thermométrique (10) pour produire une oscillation dont la fréquence varie avec la température, un compteur thermométrique (12) pour compter la fréquence des oscillations dudit oscillateur thermométrique afin de convertir la fréquence en température, un circuit (14) de valeur maximale pour mémoriser la valeur maximale des températures mesurées, un comparateur (16) pour comparer la valeur du compteur thermométrique et la valeur verrouillée dans ledit circuit mémoire de valeur maximale pour détecter et verrouiller une nouvelle valeur maximale du compteur thermométrique dans le circuit mémoire de valeur maximale quand la valeur venant du compteur thermométrique est supérieure à la valeur verrouillée dans ledit circuit mémoire de valeur maximale, et un moyen d'affichage (18) pour afficher la valeur de température détectée, caractérisé par: des moyens (20, 22, 24) d'inhibition de l'oscillation pour faire cesser l'oscillation dudit oscillateur thermométrique (10) après écoulement d'un temps prédéterminé à partir d'un moment prescrit, uniquement quand ledit circuit de comparaison (16) a détecté une valeur maximale, lesdits moyens d'inhibition de l'oscillation comprenant un oscillateur de référence (20) pour générer un signal d'horloge de référence, un compteur d'horloge (22) pour compter la fréquence des oscillations dudit circuit oscillateur de référence et pour produire un signal provoquant la cessation de l'oscillation dudit oscillateur thermométrique après un temps prédéterminé, et un moyen (24) pour remettre à zéro le compteur d'horloge (22) quand ledit moyen de mesure a détecté une valeur maximale.

2. Thermomètre médical électronique selon la revendication 1, caractérisé par le fait que ledit moment dans le temps est le moment où ledit compteur d'horloge (22) est remis à zéro.

3. Thermomètre médical électronique selon la revendication 1 ou 2, caractérisé par le fait que ledit moment dans le temps est le moment où commence la détection de la température.

4. Thermomètre médical électronique selon la revendication 3, caractérisé par le fait que ledit moyen (20, 22, 24) d'inhibition de l'oscillation comprend un oscillateur de référence pour la production d'impulsions d'horloge de référence, un compteur d'horloge pour compter la fréquence de l'oscillation dudit circuit oscillateur de référence afin de faire cesser l'oscillation dudit moyen d'oscillation thermométrique après un délai prédéterminé, et un moyen pour remettre à zéro le compteur d'horloge, ledit moyen de remise à zéro (24) du compteur d'horloge comprenant un circuit de commande pour commander la sortie, dudit circuit de comparaison, d'un signal de remise à zéro vers ledit compteur d'horloge au début de la détection de la température.

# FIG.1

PRE SET REGISTER — 28

THERMOMETRIC OSCILLATOR — 10

26

THERMOMETRIC COUNTER — 12

40

42

MAXIMUM VALUE MEMORY CIRCUIT — 14

18

DISPLAY CIRCUIT

50

COMPARISON CIRCUIT — 16

48

44

46

CONTROLLING CIRCUIT — 24

CLOCK COUNTER — 22

REFERENCE OSCILLATOR — 20

# FIG.2

OVERFLOW SIGNAL $S_1$ — [36] [34] — $S_2$ OUTPUT OF THERMOMETRIC OSCILLATION

30, 32, 10

EP 0 149 215 B1

# FIG.3 (a)

FIG.3

| FIG.3 (a) |
|-----------|
| FIG.3 (b) |

```
┌─────────────────┐
│  COUNT  UP  WITH │  ,114
│  CLOCK COUNTER   │
└────────┬────────┘
         │
    ◇─────────◇  ,116
   ╱           ╲
  NO  OVERFLOW?  ╲
  ◇            ◇
   ╲           ╱
    ◇─────────◇
         │ YES
┌─────────────────┐
│  DISCONTINUE    │  ,118
│  THERMOMETRIC   │
│  OSCILLATION    │
└────────┬────────┘
         │
┌─────────────────┐
│    DISPLAY      │
└────────┬────────┘
         │ 120
       (STOP)
```

┌─────────────────┐
│  RESET CLOCK    │  108
│  COUNTER        │
└────────┬────────┘
         │
┌─────────────────┐
│  MEMORIZE  THE  │  110
│  MAXIMUM VALUE  │
└────────┬────────┘
         │
┌─────────────────┐
│    DISPLAY      │
└─────────────────┘
         112

# FIG.3 (b)

# FIG.4a

# FIG.4b

# FIG.5